Europäisches Patentamt

European Patent Office

Office européen des brevets

(11) Publication number: **0 129 411**
**B1**

(12) EUROPEAN PATENT SPECIFICATION

(45) Date of publication of patent specification: 02.11.88

(21) Application number: **84304013.0**

(22) Date of filing: **14.06.84**

(51) Int. Cl.⁴: **H 02 M 3/28**

(54) Power supply circuit.

(30) Priority: **16.06.83 JP 108104/83**

(43) Date of publication of application:
**27.12.84 Bulletin 84/52**

(45) Publication of the grant of the patent:
**02.11.88 Bulletin 88/44**

(84) Designated Contracting States:
**DE GB**

(56) References cited:
**EP-A-0 058 399**
**DE-A-2 742 010**

(73) Proprietor: **KABUSHIKI KAISHA TOSHIBA
72, Horikawa-cho Saiwai-ku
Kawasaki-shi Kanagawa-ken 210 (JP)**

(72) Inventor: **Onodera, Toshihiro c/o Patent
Division
Kabushiki Kaisha Toshiba 1-1 Shibaura 1-chome
Minato-ku Tokyo 105 (JP)**
Inventor: **Masuda, Youichi c/o Patent Division
Kabushiki Kaisha Toshiba 1-1 Shibaura 1-chome
Minato-ku Tokyo 105 (JP)**

(74) Representative: **Freed, Arthur Woolf et al
MARKS & CLERK 57-60 Lincoln's Inn Fields
London WC2A 3LS (GB)**

Courier Press, Leamington Spa, England.

# Description

This invention relates to a power supply circuit based on a voltage resonance type switching system adapted to supply power to a large high voltage power load.

Hitherto, a power supply circuit of a switching system has been chiefly applied as a power source for a large high voltage power load. A power supply circuit, for example, of a chopper or full-bridge system is so arranged that power is supplied by the direct switching of input voltage by a switching element. In this case, the quantity of power supplied to the load circuit is made to vary with the conduction period of the switching element. However, the power supply circuit of the above-mentioned type has the drawbacks that the switching loss of said switching element increases with the switching frequency, and that the high frequency operation of the power supply circuit is largely governed by the operation characteristic of the switching element, that is, its switching speed.

In addition to the power supply circuit of the above-mentioned type, there has been proposed another power supply circuit of a resonance switching type (a voltage resonance or current resonance type) which is characterized in that the input voltage is not directly switched, but that switching is carried out by an external circuit in such a manner that the voltage or current supplied to a switching element constitutes the arc portion of a resonance waveform. This proposed power supply circuit of the resonance switching type indeed has the merit that even when the switching element is operated with an elevated frequency, the transition loss of the switching element does not appreciably increase, thereby ensuring a highly efficient switching. Nevertheless, said proposed power supply circuit is still accompanied with the drawback that since the resonance condition for the power supply is naturally defined by the external circuit, it is impossible to control effectively the power supply even by changing the conduction period or the frequency of the switching element.

With the conventional power supply circuit of the above-mentioned resonance type, a DC—DC converter is provided at the input stage to change the magnitude of the power to be supplied. However, the power supply circuit of such a type gives rise to complexities in the circuit arrangement and undesirably enlarges the scale of the whole power supply circuit device.

EP—A—58399 discloses a voltage resonance type high frequency switching circuit which includes a switching element connected between a power supply and the primary winding of a transformer and is on-off controlled with a predetermined cycle and with a predetermined conduction period. The secondary winding of the transformer is connected to a parallel circuit of a filtering capacitor and a load via a rectifier diode and a choke coil. The choke coil is provided at the output side of the circuit so that the current cut off by the switch is decreased without reduction in the power that can be supplied by the circuit. The device of this citation, however, has the problem that the power can only be varied over a narrow range while the resonance condition is satisfied.

It is accordingly the object of this invention to provide a power supply circuit which can efficiently supply power to a load circuit by utilizing the waveform of the voltage resonance and by easily controlling the power supply over a broad range.

According to the invention in a first aspect there is provided a power supply circuit comprising: a main periodically operated switch means formed of a main switch element and a damper diode connected in parallel; a transformer whose primary winding is connected to a DC source through said main switch means, and whose secondary winding is connected to a load circuit; a resonance capacitor which is connected in parallel with the primary winding of said transformer and carries out voltage resonance interlockingly with at least the leakage inductor of said transformer; a switch drive circuit which is connected to said main switch means to control the operation thereof; and characterised by: an auxiliary electronic switch means formed of a switch element and a damper diode connected in parallel which is connected between said resonance capacitor and the primary winding of said transformer in series with said resonance capacitor and is so operated as to prevent said resonance capacitor from being charged again by a resonance current; and wherein the switch drive circuit is further connected to said auxiliary switch means to control the operation thereof.

According to the invention in a second aspect there is provided a power supply circuit comprising: a main periodically operated switch means formed of a main switch element and a damper diode; a transformer whose primary winding is connected to a DC source through said main switch means, and whose secondary winding is connected to a load circuit; a resonance capacitor which carries out voltage resonance interlockingly with at least the leakage inductor of said transformer; a switch drive circuit which is connected to said main switch means to control the operation thereof; and characterised by an auxiliary switch means formed of a switch element and a damper diode which is connected between said resonance capacitor and the primary winding of said transformer in series to said resonance capacitor and is so operated as to prevent said resonance capacitor from being charged again by a resonance current; and wherein the switch drive circuit is connected to the auxiliary switch means to control the operation thereof and the resonance capacitor is connected in parallel with the main switch means.

The described embodiments of the invention provide a power supply circuit wherein: the primary winding of a transformer is connected to a DC course through a periodically operated main switch; a load circuit is connected to the secondary winding of the transformer; and a resonance capacitor is connected in parallel to the main switch or the primary winding of the transformer; an auxiliary switch is provided between said resonance capacitor and the primary winding of the transformer in series to said capacitor to control the operation of the voltage resonance system of said resonance capacitor wherein said auxiliary switch is operated with a controlled timing, thereby efficiently regulating the power supply to the load circuit over a broad range.

The power supply circuit embodying this invention offers the advantages that the conduction period and frequency of the main switch are kept constant, thereby stabilizing the resonance condition of said main switch, and ensuring an efficient power supply to the load ciricut; and that the control of the resonance loop of the resonance capacitor by the auxiliary switch regulates the power supply to the load circuit over a broad range. In other words, the power supply circuit of this invention is characterized in that the power supplied to a load circuit can be easily controlled by said auxiliary switch while the prescribed conditions for the voltage resonance are maintained, and further, that the subject power supply circuit has a simplified arrangement.

An embodiment of the invention will now be described, by way of example, with reference to the accompanying drawings in which:

Fig. 1 shows the arrangement of a power supply circuit according to a first embodiment of this invention;

Figs. 2a to 2e are the equivalent circuits of the subject power supply circuit, indicationg the various stages of operation of the first embodiment of Fig. 1;

Figs. 3a to 3d, Figs. 4a to 4e, and Figs. 5a to 5e show the signal waveforms which appear in the various sections of the subject power supply circuit by way of illustrating the respective stages of operation of said circuit;

Fig. 6 indicates the arrangement of the power supply circuit according to a second embodiment of the invention; and

Fig. 7 sets forth the arrangement of a power supply circuit according to a third embodiment of the invention.

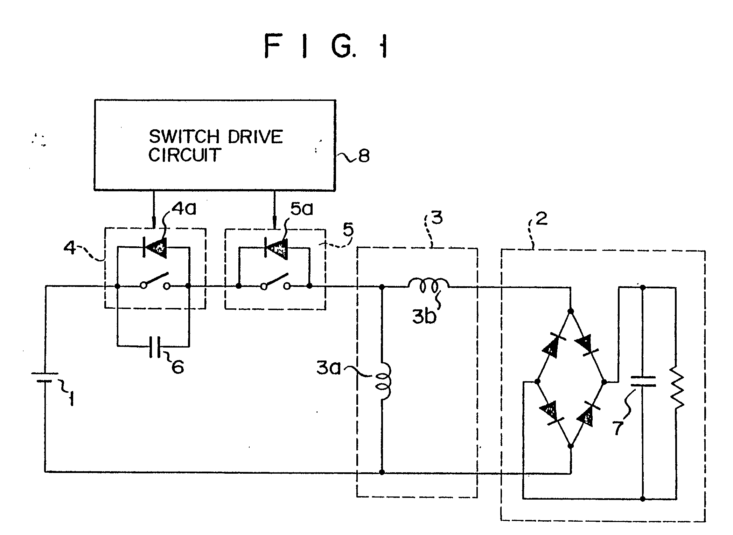

Fig. 1 shows a power supply circuit through which power is conducted from a DC source 1 to a load circuit 2. A transformer 3 is actually formed of primary and secondary windings. In Fig. 1, however, the transformer 3 is equivalently indicated by an excitation inductor 3a and leakage inductor 3b. One end of the primary winding, namely, that of the excitation inductor 3a is connected to one end of a DC source 1 through an auxiliary switch element 5 and main switch element 4. In turn, the other end of the primary winding of the transformer 3, namely, that of the excitation inductor 3a is connected to the other end of the DC source 1. The main switch 4 and auxiliary switch 5 are respectively formed of a semiconductor switch, for example, a thyristor constructed by connecting damper diodes 4a, 5a in parallel. The main switch 4 is operated by a switch drive circuit 8 with a presecribed frequency during a prescribed conduction period. A resonance capacitor 6 is connected in parallel to the main switch 4. The resonance capacitor 6 and the leakage inductor 3b of the transformer 3 jointly constitute a voltage resonance circuit. An auxiliary switch 5 is provided between the resonance capacitor 6 of the voltage resonance circuit and the primary winding of the transformer 3 in series to the resonance capacitor 6. The above-mentioned arrangement constitutes a voltage resonance type of single-ended switching circuit.

The main and auxiliary switches 4, 5 are individually operated by a switch drive circuit 8. A load circuit 2 is connected to the secondary winding of the transformer 3, namely, between both ends of the series circuit formed of the excitation inductor 3a and leakage inductor 3b. In this case, it is assumed that there are provided, as shown in Fig. 1, a bridge rectification circuit involving a diode and a circuit consisting of a smoothing capacitor and a resistance load both connected to the output terminal of the bridge rectification circuit.

In short, the primary winding of the transformer 3 whose secondary winding is connected to the load circuit 2 is connected to the DC source 1 through the main switch 4. The resonance capacitor 6 is connected in parallel to the main switch 4. As a result, there is provided a power supply circuit of the voltage resonance switching type. The auxiliary switch 5 is connected between the resonance capacitor 6 and the secondary winding of the transformer 3 which are both connected in the subject power supply circuit in series to the resonance capacitor 6 in order to control intermittently the operation of the resonance system.

Now let it be assumed that the main switch 4 is operated with a prescribed frequency for a prescribed conduction period, thus enabling the subject power supply circuit to be stable. In this case, the terminal voltage Vc of the resonance capacitor 6 drops to a zero level immediately before the main switch 4 is rendered conductive. The terminal voltage Eout of the smoothing capacitor 7 remains constant.

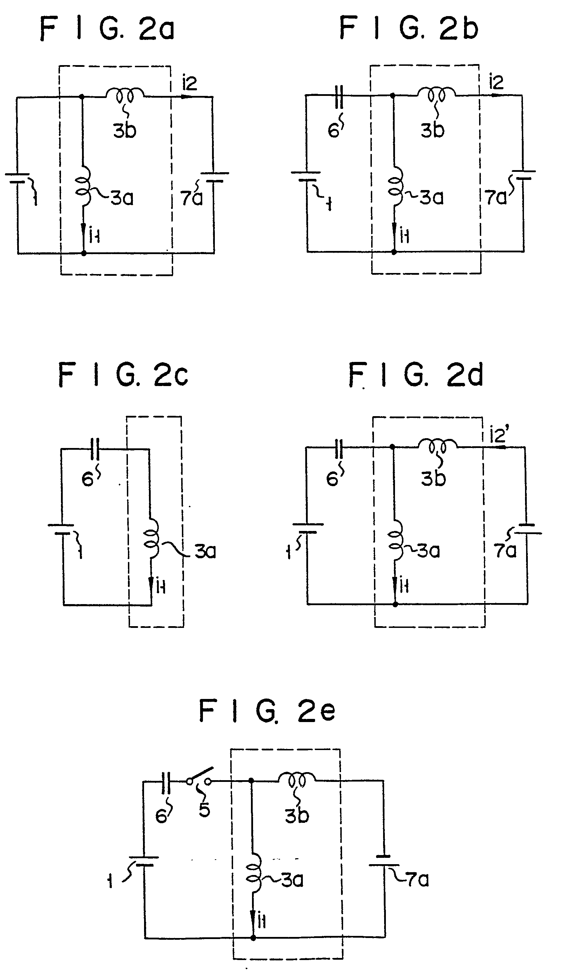

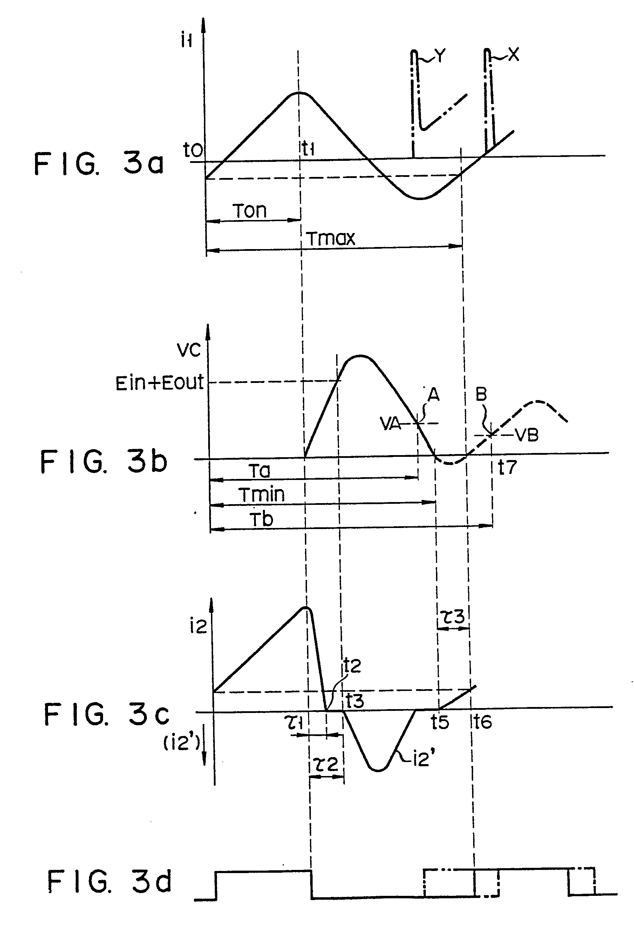

Figs. 2a to 2e show the equivalent circuits of the subject power supply circuit during various operations of the main switch 4 and the auxiliary switch 5. Figs. 3a to 3d, 4a to 4e, and 5a to 5e show the current, voltage, or operating condition of the various sections of the subject power supply circuit.

Now let it be assumed that the main switch 4 alone is intermittently operated and the auxiliary switch 5 remains conductive. The waveforms representing the current, voltage, or operating condition of the various sections of the subject power supply circuit are shown in Figs. 3a to 3d. Further, let it be assumed that both the main and auxiliary switches 4, 5 are rendered conductive. The equivalent circuit corresponding to this condiction may be set forth as in Fig. 2a, with the terminal voltage Eout of the aforesaid smoothing capacitor 7 regarded as a cell 7a.

Current i1 flowing through the excitation inductor 3a of the transformer 3 progressively increases with the passage of time starting with the point of time t0 in accordance with the coefficient expressed by the ratio Ein/L1 between the voltage Ein of the power source 1 and the value L1 of the excitation inductor 3a. At this time, the current i2 running through the leakage inductor 3 of the transformer 3 progressively increases with the above-mentioned passage of time in accordance with the coefficient expressed by the ratio

$$\frac{(Ein—Eout)}{L2}.$$

During the period Ton from t0 to t1, therefore, the sum of the above-mentioned currents which is expressed as:

$$(Ein/L1) \times t + \{(Ein—Eout)/L2\} \times t$$

runs through the switches 4, 5.

Later, an inertial current flows through the leakage inductor 3b during a period τ1, which extends from the point t1 at which the switch 4 is opened to be rendered nonconductive to a point of time t2. During the period τ1, therefore, the power supply circuit of this invention is operated as indicated by the equivalent circuit of Fig. 2B. As a result, the current i1 which ran through the excitation inductor 3a up to this point is applied to charge the resonance capacitor 6 through the DC source 1. On the other hand, the inertial current i2 which flowed through the leakage inductor 3b further runs through the cell 7a and DC source 1 to charge the resonance capacitor 6. Therefore, as shown in Fig. 3b, the terminal voltage Vc of the resonance capacitor 6 increases during the period τ1, while resonating according to the harmonic average of the capacitance of the capacitor 6, and the aforesaid excitation inductor 3a and leakage inductor 3b. Later when the inertial current i2 which ran through the leakage inductor 3b is extinguished, the voltage between both terminals of the leakage inductor 3b falls to zero, thereby rendering the bridge rectifier of the load circuit nonconductive. As shown in Fig. 2c, therefore, the equivalent circuit in this case is represented by a closed circuit formed of the DC source 1, the resonance capacitor 6, and the excitation inductor 3a.

At the above-mentioned point of time, the inertial current i1 flowing through the excitation inductor 3a still continues to be supplied to the resonance capacitor 6 through the DC source 1. During this period, the voltage between both terminals of the excitation inductor 3a is progressively reduced. When a period τ2 has passed since the switch 4 was rendered nonconductive at time t1 and when the voltage between both terminals of said excitation inductor 3a falls below the voltage of the equivalent cell 7a, then the bridge rectifier of the load circuit 2 is impressed with a voltage having the opposite polarity to that which has been applied up to this point. At a point of time t3, therefore, the bridge rectifier is rendered conductive (indicating an equivalent circuit as illustrated in Fig. 2d). Consequently, one part i2' of the inertial current i1 stored in the excitation inductor 3a runs through the cell 7a, and the other part (i1—i2') of the inertial current i1 is conducted to the resonance capacitor 6 through the DC source 1.

When the charge of the resonance capacitor 6 is brought to an end, and the terminal voltage Vc thereof reaches a maximum level Vcmax, the charge stored in the resonance capacitor 6 is released through the DC source 1, cell 7a, and the leakage inductor 3b. When the above-mentioned resonance has advanced and a point of time t5 has been reached, the terminal voltage Vc of the resonance capacitor 6 biases the damper diode 4a in the forward direction. As a result, the currents flowing through the excitation inductor 3a and leakage inductor 3b are brought back to the DC source 1 through the damper diode 4a.

The foregoing description, which refers to the operation of the power supply circuit embodying this invention, where the main switch 4 is periodically operated, and the auxiliary switch 5 is ordinarily rendered conductive, namely shows that power is transmitted while the voltage waveform defines a resonance arc by the voltage resonating from the resonance capacitor 6.

A description may now be made of the case where the conduction period or switching frequency of the main switch 4 is simply varied to change the amount of power supplied to the load circuit 2. Now let it be assumed that the conduction period Ton of the main switch 4 is kept constant, and that the load circuit 2 is subjected to the prescribed condition. A discussion may now be made of the range over which the frequency T of the main switch 4 can be varied while the aforementioned condition of voltage resonance is satisfied.

As the broken line in Fig. 3b shows, the terminal voltage Vc of the resonance capacitor 6 assumes a negative value during a period τ3. That is, it comes to have a negative value at time t5, at the end of period Tmin which begins at time t0, and comes to have a positive value at time t6, at the end of period Tmax which begins at time t0. When the terminal voltage Vc of the resonance capacitor 6 falls below zero, the damper diode 4a is rendered conductive, thereby maintaining the terminal voltage Vc of the resonance capacitor 6 substantially at zero. Even when, therefore, the succeeding switching period starts during this interval, it is possible to prevent a sharply rising current from running through the main switch 4 due to its conduction. If, however, the succeeding switching period is started during any other period than that described above, then many difficulties will arise. For instance, when the switching period of the main switch 4, for example, Tb is longer than a period Tmax, then the resonance capacitor 6 is again charged to have a positive potential at a point of time t7 by means of the excitation inductor 3a and the auxiliary switch 5 which has already been rendered conductive. The charged voltage VB is impressed on both terminals of the main switch 4. If, therefore, said voltage VB is short-circuited by the conduction of the main switch 4, then an abnormally large current X will flow through the main switch 4 as shown in Fig. 3a. The abnormally large current X leads to an increase in the transition loss of the main switch 4. In an extreme case of said loss, the main switch 4 may be damaged. Therefore, when determining the aforementioned switching period so that the resonance condition of the power supply circuit is preserved, it is prescribed that the upper limit of the switching period be set at the aforementioned period Tmax.

Conversely when the switching period of the main switch 4 is set at Ta which is shorter than Tmin, the main switch 4 is rendered conductive when the resonance capacitor 6 retains a positive potential VA as indicated at point A in the waveform of Fig. 3b. In this case too, therefore, the resonance capacitor 6 charged to the aforementioned positive voltage VA is short-circuited, causing a sharply rising current Y to flow through the power supply circuit as in the preceding case which leads to an increase in the transition loss of the power supply circuit, and which in some cases gives rise to the possibility of damaging the main switch 4. In view of the abovementioned difficulties, it is requred that the minimum switching period of the main switch 4 be set at Tmin.

With the conventional power supply circuit, the range over which the switching period of the main switch 4 can be varied is defined between Tmin and Tmax, namely to such an extent that the maximum output from the power supply circuit is about 5 times the minimum output thereof. This is one of the reasons why the conventional power supply circuit of the voltage resonance switching system fails to vary its power supply over a broad range.

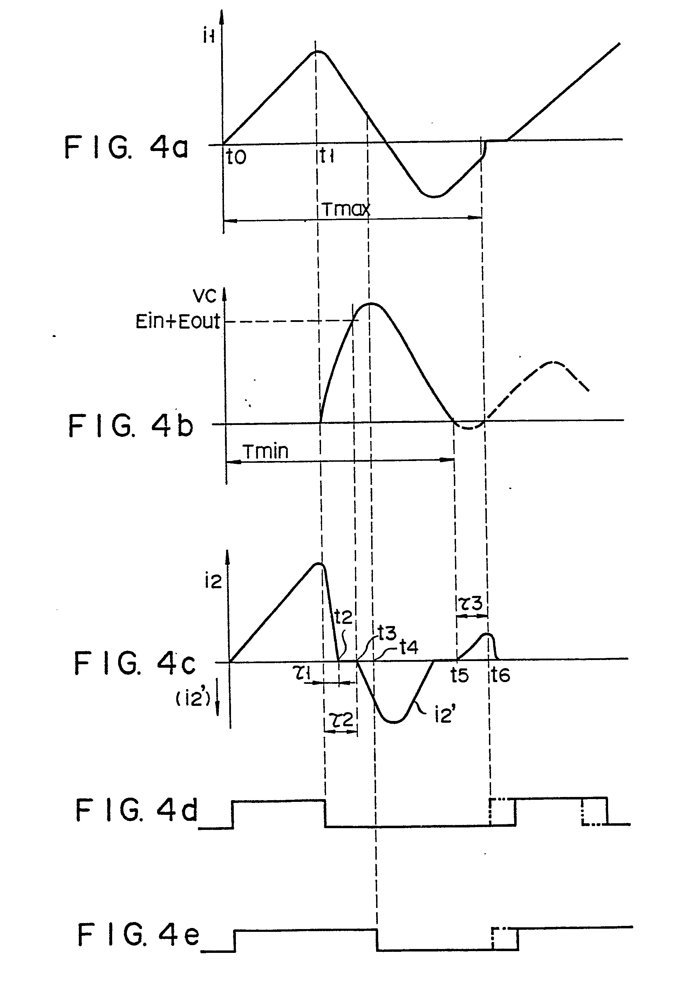

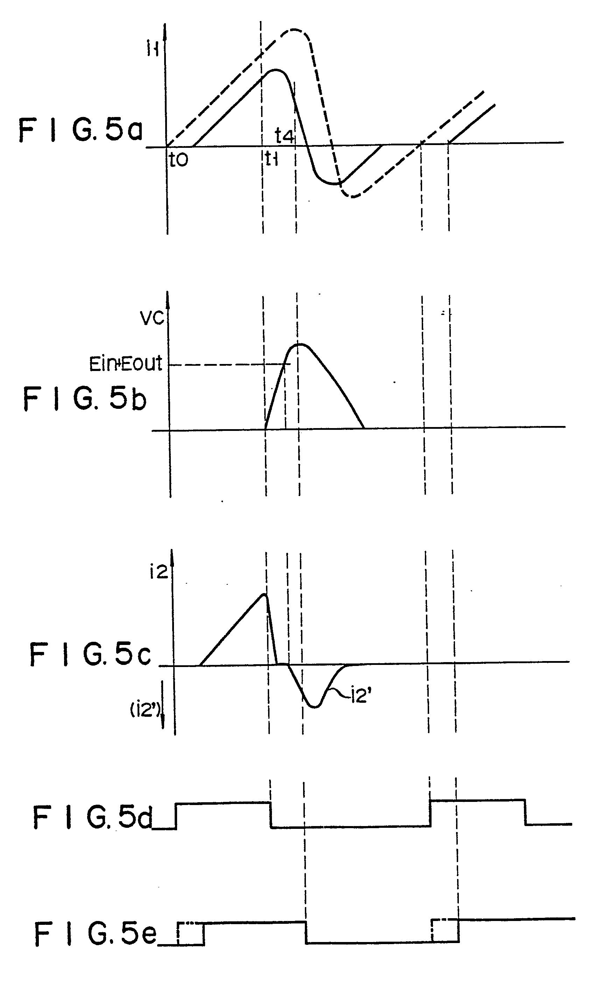

In contrast, the power supply circuit embodying this invention is characterized in that an auxiliary switch 5 is provided in series between the resonance capacitor 6 and the transformer 3. This auxiliary switch 5 is rendered conductive in synchronization with the main switch 4 as shown in Figs. 4a to 4e. Or as shown in Figs. 5a to 5e, the conduction of the auxiliary switch 5 is started at a point delayed for a certain length of time from the initial point of the conduction period Ton of the main switch 4. The conduction of the auxiliary switch 5 is brought to an end at an optional point of time included in the period extending from a point of time t4 at which the current i1+i2 flowing through the auxiliary switch 5 falls to zero to a point of time at which the recharge of the resonance capacitor 6 is commenced. Figs. 4a and 5a indicate the waveform of the current i1 flowing through the excitation inductor 3a. Figs. 4b and 5b show the waveform of the terminal voltage Vc of the resonance capacitor 6. Figs. 4c and 5c represent the waveform of the current running through the leakage inductor 3b. Figs. 4d and 5d illustrate the lengths of time in which the main switch 4 is rendered conductive and nonconductive. Figs. 4e and 5e illustrate the lengths of time in which the auxiliary switch 5 is rendered conductive and nonconductive. Figs. 4e and 5e show that the auxiliary switch 5 is shut off at a point of time t4 at which the current i1+i2 conducted through the auxiliary switch 5 falls to zero.

The reason why an abnormal current X arises when the switching period of the conventional power supply circuit is changed from Tmax to Tb is that the main switch 4 remains nonconductive during a period extending frm Tmax to Tb. During this period the current supplied from the DC source 1 is charged in the resonance capacitor 6 through a closed circuit consisting of the DC source 1, resonance capacitor 6 and transformer 3. If, therefore, the closed circuit of the power supply side shown in Fig. 2d is shut off by the auxiliary switch 5 connected in series to the resonance capacitor 6 at least during the period extending from a point of time t6 to a point of time t7 after the period Tmax shown in Fig. 3 thereby preventing the resonance capacitor 6 from being charged again, then it is possible to keep the terminal voltage Vc of the resonance capacitor 6 at a zero potential even after the period Tmax. In other words, if it is desired to let the main switch 4 be intermittently operated for a longer time than the resonance period of the subject power supply circuit, it is advised to shut off the auxiliary switch 5 until the main switch 4 is rendered conductive after one resonance period of the subject power supply circuit is brought to an end, as shown in Fig. 4e. This is because shutting off the auxiliary switch 5 prevents the resonance capacitor 6 from being charged again by the resonance current, thereby keeping the terminal voltage of the resonance capacitor 6 at a zero potential. When, therefore, the main switch 4 is rendered conductive, a sharply rising current ceases to flow through the main switch 4, and spike-shaped currents X, Y, as shown in Fig. 3a, cease to arise. Thus, the prescribed resonance condition of the subject power supply circuit can be retained without being obstructed in any way.

If it is desired to control the power supply without changing the operation period of the main switch 4, it is advised to operate the auxiliary switch 5 after operating the main switch 4, as shown in Fig. 5e. This is because a delayed operation of the auxiliary switch 5 prevents the resonance capacitor 6 from being charged again by the resonance current while it keeps the terminal voltage of the resonance capacitor 6 at a zero potential, and reduces the amount of power supplied to the excitation inductor 3a and leakage inductor 3b. When, therefore, the main switch 4 is rendered conductive, no sharply rising current runs through the main switch 4, thereby suppressing the occurrence of spike-shaped currents such as X, Y shown in Fig. 3a.

If both main and auxiliary switches 4, 5 are operated at the same time, the switching periods of the switches 4, 5 are varied over a period extending from Tmin to Tmax (the same time period as that in which the switching period of the main switch 4 is controlled), then it is possible to control the power supplied to the load circuit 2. If the switching periods of the main and auxiliary switches 4, 5 are further extended by causing both switches to be rendered nonconductive for a longer length of time, it is possible to reduce the average power supplied to the load circuit 2 and to control the power supply over a broader range. Since the power supply is stopped while the main and auxiliary switches 4, 5 are rendered nonconductive, it is possible to effect an intermittent power supply by stopping the power supply during the above-mentioned nonconduction period of the main and auxiliary switches 4, 5. In any case, the power supply can be decreased while the resonance condition is maintained. If the auxiliary switch 5 is started after the main switch 4, the current i1 will assume the waveform shown in Fig. 5a. Thus, the power supplied to the load circuit can be regulated over a broad range by controlling the above-mentioned delay in the auxiliary switch 5, without changing the conduction period of the main switch 4.

When it is desired to control the power supply to the load by varying the switching periods of the main and auxiliary switches 4, 5, the auxiliary switch 5 prevents the recharging of the resonance capacitor 6, thereby reducing the terminal voltage of said resonance capacitor 6 to a zero level. When, therefore, the main switch 4 is rendered conductive, no sharply rising current runs through the main switch 4, thereby controlling the power supplied to the load over a broad range. If it is desured to control power supplied to the load without changing the switching period of the main switch 4, it is advised to control the conduction period of the auxiliary switch 5 so as to shorten the conduction period of the main switch 4. Since, at this time, the recharge of the resonance capacitor 6 is prevented, no excessively large current will flow through the main switch 4 when it is rendered conductive, thereby ensuring the control of the power supplied to the load over a broad range. Since, moreover, the resonance condition of the subject power supply circuit is kept constant, an efficient amount of power can be supplied.

When a large amount of power is handled and the main switch 4 is of a self-extinguishing type such as the so-called giant transistor or gate turn-off thyristor (GTO thyristor), then it is possible to use an ordinary thyristor as the auxiliary switch 5. Therefore, it is unnecessary that the switch drive circuit 8 (Fig. 1) contain any special extinction circuit for an auxiliary switch 5. In this case, however, it is required that the nonconduction period of the auxiliary switch 5 be shorter than half the resonance period of the subject power supply circuit. It is generally known that the so-called tail current flows through the GTO thyristor while it is rendered nonconducting. When, however, the GTO thyristor is applied as a main switch 4, the occurrence of said tail current is forcefully suppressed by the auxiliary switch 5. Therefore, it is possible to avoid any harmful effects caused by, for example, a transition loss during the nonconduction of the GTO thyristor applied as the main switch 4. Consequenty, the subject power supply circuit can be stably operated.

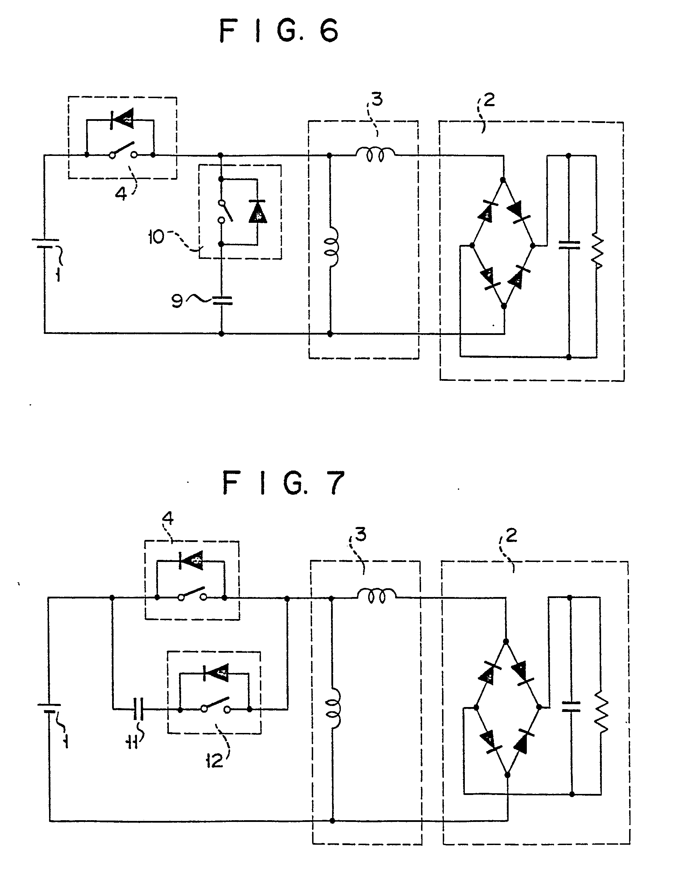

A description may now be made with reference to Fig. 6 of a power supply circuit according to a second embodiment of this invention. With a power supply circuit of the voltage resonance switching system which is constructed by connecting a resonance capacitor 9 in parallel to the primary winding of a transformer 3, an auxiliary switch 10 is connected in series to said resonance capacitor 9. A series circuit consisting of said resonance capacitor 9 and auxiliary switch 10 is connected in parallel to the primary winding of transformer 3.

A description may now be made with reference to Fig. 7 of a power supply circuit according to a third embodiment of the invention. With this third embodiment, an auxiliary switch 12 is connected in series to a resonance capacitor 11. A series circuit consisting of the resonance capacitor 11 and auxiliary switch 12 is connected in parallel to the main switch 4.

The above-mentioned second and third embodiments ensure the control of the power supplied to a load circuit over a broad range with the resonance condition of the subject power supply circuit maintained, and consequently, ensures an efficient power supply.

The power supply circuit of this invention is chiefly characterized by the arrangement of the primary side of a transformer 3. Therefore, the subject power supply circuit is applicable not only to a load circuit 2 arranged as shown in the accompanying drawings, but also to other load circuits having other arrangements.

**Claims**

1. A power supply circuit comprising:
a main periodically operated switch means (4) formed of a main switch element and a damper diode connected in parallel;
a transformer (3) whose primary winding is connected to a DC source (1) through said main switch means (4), and whose secondary winding is connected to a load circuit (2);
a resonance capacitor (9) which is connected in parallel with the primary winding of said transformer (3) and carries out voltage resonance interlockingly with at least the leakage inductor of said transformer (3); a switch drive circuit (8) which is connected to said main switch means to control the operation thereof; and characterised by:

an auxiliary electronic switch means (10) formed of a switch element and a damper diode connected in parallel which is connected between said resonance capacitor (9) and the primary winding of said transformer (3) in series with said resonance capacitor (9) and is so operated as to prevent said resonance capacitor (9) from being charged again by a resonance current; and wherein the switch drive circuit (8) is further connected to said auxiliary switch means (10) to control the operation thereof.

2. A power supply circuit comprising:

a main periodically operated switch means (4) formed of a main switch element and a damper diode;

a transformer (3) whose primary winding is connected to a DC source (1) through said main switch means (4), and whose secondary winding is connected to a load circuit (2);

a resonance capacitor (6, 11) which carries out voltage resonance interlockingly with at least the leakage inductor of said transformer (3);

a switch drive circuit (8) which is connected to said main switch means (4) to control the operation thereof; and characterised by

an auxiliary switch means (5, 12) formed of a switch element and a damper diode which is connected between said resonance capacitor (6, 11) and the primary winding of said transformer (3) in series to said resonance capacitor (6, 11) and is so operated as to prevent said resonance capacitor (6, 11) from being charged again by a resonance current; and wherein the switch drive circuit (8) is connected to the auxiliary switch means (5, 12) to control the operation thereof and the resonance capacitor is connected in parallel with the main switch means (4).

3. A power supply circuit according to claim 2, characterised in that said auxiliary switch means (5) is connected in series with a parallel circuit formed of said main switch means (4) and resonance capacitor (6).

4. The power supply circuit according to claim 2, characterised in that a series circuit formed of said auxiliary switch means (12) and resonance capacitor (11) is connected in parallel with said main switch means (4).

5. The power supply circuit according to any one of the preceding claims characterised in that said main switch element (4) is formed of a thyristor.

6. The power supply circuit according to any one of claims 1 to 4 characterised in that said main switch element (4) is formed of a self-extinguishable switch element.

7. The power supply circuit according to any one of the preceding claims, characterised in that said main switch element (4) is formed of a gate turn-off thyristor.

8. The power supply circuit according to any one of claims 1 to 4 and 6 characterised in that said main switch element (4) is formed of a transistor.

9. The power supply circuit according to any one of the preceding claims, characterised in that said auxiliary switch element (5, 10, 12) is formed of a thyristor.

**Patentansprüche**

1. Stromversorgungsschaltung mit:
—einer periodisch betriebenen Hauptschalteinrichtung (4) aus einem Hauptschaltelement und einer Dämpfungsoder Zeilendiode, die parallel geschaltet ist;
—einem Transformator (3), dessen Primärwicklung mit einer Gleichstromquelle (1) über die Hauptschalteinrichtung (4) verbunden ist und dessen Sekundärwicklung an einem Lastkeis (2) angeschlossen ist;
—einem Resonanzkondensator (9), der parallel zur Primärwicklung des Transformators (3) liegt und eine Spannungsresonanz verriegelt mit wenigstens der Streuinduktivität des Transformators (3) ausführt;
—einem Schaltansteuerkreis (8), der mit der Hauptschalteinrichtung verbunden ist, um deren Betrieb zu steuern; gekennzeichnet durch:
—eine elektronische Hilfsschalteinrichtung (10), die aus einem schaltelement und einer parallel verbundenen Dämpfungsdiode gebildet ist, welche zwischen dem Resonanzkondensator (9) und der Primärwicklung des Transformators (3) in Reihe mit dem Resonanzkondensator (9) liegt und so betrieben ist, daß ein Wiederaufladen des Resonanzkondensators (9) durch einen Resonanzstrom verhindert ist, wobei der Schaltansteuerkreis (8) weiterhin mit der Hilfsschalteinrichtung (10) zur Steuerung von deren Betrieb verbunden ist.

2. Stromversorgungsschaltung mit:
—einer periodisch betriebenen Hauptschalteinrichtung (4) aus einem Hauptschaltelement und einer Dämpfungsoder Zeilendiode
—einem Transformator (3), dessen Primärwicklung mit einer Gleichstromquelle (1) über die Hauptschalteinrichtung (4) verbunden ist und dessen Sekundärwicklung an einen Lastkreis (2) angeschlossen ist;
—einem Resonanzkondensator (6, 11), der eine Spannungsresonanz verriegelt mit wenigstens der Streuinduktivität des Transformators (3) ausführt;
—einem Schaltansteuerkreis (8), der mit der Hauptschalteinrichtung (4) zur Steuerung von deren Betrieb verbunden ist; gekennzeichnet durch
—eine Hilfsschalteinrichtung (5, 12), die aus einem Schaltelement und einer Dämpfungsdiode gebildet ist, welche zwischen dem Resonanzkondensator (6, 11) und der Primärwicklung des Transformators (3) in Reihe mit dem Resonanzkondensator (6, 11) liegt und so betrieben ist, daß ein Wiederaufladen des Resonanzkondensators (6, 11) durch einen Resonanzstrom verhindert ist, wobei der Schaltansteuerkreis (8) mit der Hilfsschalteinrichtung (5,12) zur Steuerung von deren Betrieb verbunden ist und der Resonanzkondensator parallel zu der Hauptschalteinrichtung (4) angeschlossen ist.

3. Stromversorgungsschaltung nach Anspruch 2, dadurch gekennzeichnet, daß die Hilfsschalteinrichtung (5) in Reihe zu einem Parallelkreis aus der Hauptschalteinrichtung (4) und dem Resonanzkondensator (6) angeschlossen ist.

4. Stromversorgungsschaltung nach Anspruch 2, dadurch gekennzeichnet, daß eine Reihenschaltung aus der Hilfsschalteinrichtung (12) und dem Resonanzkondensator (11) parallel zu der Hauptschalteinrichtung (4) angeschlossen ist.

5. Stromversorgungsschaltung nach einem der Vorangehenden Ansprüche, dadurch gekennzeichnet, daß das Hauptschaltelement (4) aus einem Thyristor gebildet ist.

6. Stromversorgungsschaltung nach einem der Ansprüche 1 bis 4, dadurch gekennzeichnet, daß das Hauptschaltelement (4) aus einem selbstlöschenden Schaltelement besteht.

7. Stromversorgungsschaltung nach einem der vorangehenden Ansprüche, dadurch gekennzeichnet, daß das Hauptschaltelement (4) aus einem Vollsteuergatt-Thyristor (GTO-Thyristor) gebildet ist.

8. Stromversorgungsschaltung nach einem der Ansprüche 1 bis 4 und 6, dadurch gekennzeichnet, daß das Hauptschaltelement (4) aus einem Transistor gebildet ist.

9. Stromversorgungsschaltung nach einem der vorangehenden Ansprüche, dadurch gekennzeichnet, daß das Hilfsschaltelement (5, 10, 12) aus einem Thyristor gebildet ist.

## Revendications

1. Circuit d'alimentation électrique, comprenant:

un moyen de commutation principal périodiquement actionné (4) qui est formé d'un élément de commutation principal et d'une diode d'amortissement connectés en parallèle;

un transformateur (3) dont l'enroulement primaire est connecté à une source de courant continu (1) par l'intermédiaire dudit moyen de commutation principal (4) et dont l'enroulement secondaire est connecté à un circuit de charge (2);

un condensateur de résonance (9) qui est connecté en parallèle avec l'enroulement primaire dudit transformateur (3) et réalise une résonance de tension en interverrouillage avec au moins l'inductance de fuite dudit transformateur (3); un circuit de commande de commutation (8) qui est connecté audit moyen de commutation principal afin de commander son fonctionnement; caractérisé par:

un moyen de commutation électronique auxiliaire (10) formé d'un élément de commutation et d'une diode d'amortissement connectés en parallèle, qui est connecté entre ledit condensateur de résonance (9) et l'enroulement primaire dudit transformateur (3) en série avec ledit condensateur de résonance (9) et est actionné de façon à empêcher que ledit condensateur de résonacne (9) ne soit de nouveau chargé par un courant de résonance; et où le circuit de commande de commutation (8) est en outre connecté audit moyen de commutation auxiliaire (10) de façon à commander son fonctionnement.

2. Circuit d'alimentation électrique, comprenant:

un moyen de commutation principal périodiquement actionné (4) qui formé d'un élément de commutation principal et d'une diode d'amortissement;

un transformateur (3) dont l'enroulement primaire est connecté à une source de courant continu (1) par l'intermédiaire dudit moyen de commutation principal (4) et dont l'enroulement secondaire est connecté à un circuit de charge (2);

un condensateur de résonance (6, 11) qui réalise und résonance de tension en interverrouillage avec au moins l'inductance de fuite dudit transformateur (3);

un circuit de commande de commutation (8) qui est connecté audit moyen de commutation principal afin de commander son fonctionnement; caractérisé par:

un moyen de commutation auxiliaire (5, 12) formé d'un élément de commutation et d'une diode d'amortissement, que est connecté entre ledit condensateur de résonance (6, 11) et l'enroulement primaire dudit transformateur (3) en série avec ledit condensateur de résonance (6, 11) et est actionné de mainère à empêcher que ledit condensateur de résonance (6, 11) ne soit de nouveau chargé par un courant de résonance; et où le circuit de commande de commutation (8) est connecté au moyen de commutation auxiliaire (5, 12) afin de commander son fonctionnement et le condensateur de résonance est connecté en parallèle avec le moyen de commutation principal (4).

3. Circuit d'alimentation électrique selon la revendication 2, caractérisé en ce que ledit moyen de commutation auxiliaire (5) est connecté en série avec un circuit parallèle formé dudit moyen de commutation principal (4) et dudit condensateur de résonance (6).

4. Circuit d'alimentation électrique selon la revendication 2, caractérisé en ce qu'un circuit série formé dudit moyen de commutation auxiliaire (12) et dudit condensateur de résonance (11) est connecté en parallèle avec ledit moyen de commutation principal (4).

5. Circuit d'alimentation électrique selon l'une quelconque des revendications précédentes, caractérisé en ce que ledit élément de commutation principal (4) est formé d'un thyristor.

6. Circuit d'alimentation électrique selon l'une quelconque des revendications 1 à 4, caractérisé en ce que ledit élément de commutation principal (4) est formé d'un élément de commutation à auto-extinction.

7. Circuit d'alimentation électrique selon l'une quelconque des revendications précédentes, caractérisé en ce que ledit élément de commutation principal (4) est formé d'un thyristor à extinction par la gachette.

8. Circuit d'alimentation électrique selon l'une quelconque des revendications 1 à 4 et 6, caractérisée en ce que ledit élément de commutation principal (4) est formé d'un transistor.

9. Circuit d'alimentation électrique selon l'une quelconque des revendications precédentes, caractérisé en ce que ledit élément de commutation auxiliaire (5, 10, 12) est formé d'un thyristor.

# F I G. 1

SWITCH DRIVE CIRCUIT

# F I G. 2a

# F I G. 2b

# F I G. 2c

# F I G. 2d

# F I G. 2e

FIG. 3a

FIG. 3b

FIG. 3c

FIG. 3d

FIG. 4a

FIG. 4b

FIG. 4c

FIG. 4d

FIG. 4e

F I G. 5a

t4

t0  t1

F I G. 5b

VC

Ein<Eout

F I G. 5c

i2

(i2')

i2'

F I G. 5d

F I G. 5e

# FIG. 6

# FIG. 7